# EUROPÄISCHE PATENTSCHRIFT

(11) **EP 2 605 968 B1**
(45) Veröffentlichungstag und Bekanntmachung des Hinweises auf die Patenterteilung: **30.04.2014**
(21) Anmeldenummer: 11748550.8
(22) Anmeldetag: 09.08.2011
(51) Int. Cl.: B64G 1/22, B64G 1/64

(54) **VORRICHTUNG ZUM FESTHALTEN UND KOMMANDIERTEN FREIGEBEN EINES FREIZUGEBENDEN ELEMENTS EINES RAUMFAHRZEUGES**
DEVICE FOR RETAINING AND CONTROLLED RELEASING OF AN ELEMENT OF A SPACECRAFT
DISPOSITIF DE FIXATION ET DE LIBÉRATION CONTROLÉE D'UN ÉLÉMENT D'UN VÉHICULE SPATIAL

(30) Priorität: 16.08.2010 AT 13742010
(43) Veröffentlichungstag der Anmeldung: 26.06.2013
(73) Patentinhaber: RUAG Space GmbH, 1120 Wien (AT)
(72) Erfinder: NEUGEBAUER, Christian, A-1230 Wien (AT); GÜNTHER, Florian, A-1050 Wien (AT)
(74) Vertreter: Keschmann, Marc
(86) Internationale Anmeldenummer: PCT/AT2011/000337
(87) Internationale Veröffentlichungsnummer: WO 2012/021911

(56) Entgegenhaltungen:
- WO-A2-01/56884
- FR-A1- 2 930 305
- US-A- 3 924 688
- US-A1- 2009 317 174

## Beschreibung

Die Erfindung betrifft eine Vorrichtung zum Festhalten und kommandierten Freigeben eines freizugebenden Elements eines Raumfahrzeuges, umfassend einen wenigstens zwei Spulensegmente aufweisenden geteilten Spulenkörper, bei dem wenigstens ein Spulensegment von einer ersten Position in eine zweite Position verlagerbar ist, wobei die Spulensegmente in der ersten Position ein Ende des freizugebenden Elements in einer Halteposition halten und in der zweiten Position das Ende des freizugebenden Elements aus seiner Halteposition freigeben, ein Rückhalteelement zum Halten der Spulensegmente in der ersten Position und eine Freigabevorrichtung zum Freigeben des Rückhalteelements.

An Raumfahrzeugen angebrachte Elemente müssen während des Startvorganges platzsparend untergebracht sein, um im begrenzten Raum einer Trägerrakete Platz zu finden und sie müssen erhebliche mechanische Lasten während dieses Startvorgangs ertragen. Aus diesem Grund werden solche Elemente im zusammengefalteten Zustand ans Raumfahrzeug angebracht und es wird ein steifer Lastpfad vorgesehen, der die erheblichen Inertialkräfte während des Raketenstarts überträgt. Die Öffnung dieser zusammengefalteten Elemente oder das Auftrennen des steifen Lastpfades wird durch eine Freigabevorrichtung bewirkt, die kommandiert ein Rückhalteelement freigibt, mit dem das im Raumfahrzeug angebrachte Element vorgespannt ist. Für diese Aufgabe haben sich unter anderem Elemente etabliert, welche das Prinzip des geteilten Spulenkörpers ("Split Spool" - Prinzip) ausnützen. Dabei halten Spulensegmente des geteilten Spulenkörpers das freizugebende Element dadurch zurück, dass das Ende des freizugebenden Elements mit Innenflächen der Spulensegmente zusammenwirkt, siehe auch US 2009/0317174.

Gemäß der in der US 3,924,688 A beschriebenen Ausbildung besitzt das freizugebende Element hierbei ein konusförmig ausgebildetes Ende, welches mit einer in den Spulensegmenten ausgebildeten konusförmigen Innenfläche zusammenwirkt. Beim Gegenstand der Patentschrift EP 1 255 675 B1 weist das freizugebende Element ein kugelförmig ausgebildetes Ende auf, welches gegen konische Flächen in zwei Spulehälften gehalten wird, die an ihren Rändern Aussparungen haben.

Nachteilig bei den bekannten Ausbildungen ist, dass die Kontaktgeometrie zwischen dem Ende des freizugebenden Elements und der Innenfläche der Spulensegmente stark von der Fertigungsgenauigkeit abhängt und daher in der Regel nicht exakt definiert ist. Dies führt einerseits zu ungünstigen Spannungsspitzen und andererseits dazu, dass der die Auseinanderbewegung der Spulensegmente nach der Freigabe antreibende Kraftfluss vom Ende des freizugebenden Elements auf die Spulensegmente und auch die Richtung der Kontaktkraft nicht definiert sind, was eine entsprechend unkontrollierte Bewegung der Spulensegmente und die Gefahr eines Blockierens zur Folge hat.

Die Erfindung zielt daher darauf ab, eine Vorrichtung der eingangs genannten Art dahingehend zu verbessern, dass die Hertz'schen Spannungen in der Kontaktfläche zwischen dem Ende des freizugebenden Elements und den Spulensegmenten möglichst gering gehalten werden, um europäischen Richtlinien für Mechanismen in der Raumfahrt zu genügen. Weiters sollen Fertigungstoleranzen möglichst ausgeglichen werden können. Außerdem zielt die Erfindung darauf ab, eine Kantenpressung zwischen dem freizugebenden Element und den Spulensegmenten zu verhindern.

Zur Lösung dieser Aufgabe sieht die Erfindung im Wesentlichen vor, dass das Ende des freizugebenden Elements eine zweiachsig gekrümmte, rotationssymmetrische, insbesondere sphärische Oberfläche aufweist, die mit solcherart gekrümmten Gegenflächen der Spulensegmente zusammenwirkt, dass das Ende des freizugebenden Elements in der ersten Position der Spulensegmente mit seiner Oberfläche auf jeder gekrümmten Gegenfläche lediglich unter Ausbildung einer Punktberührung aufliegt. Es wird somit eine Punkt-Auflage zwischen dem freizugebenden Element und jedem Spulensegment erreicht, wobei eine solche Punkt-Auflage unabhängig ist von etwaigen Fertigungsungenauigkeiten. Mit der erfindungsgemäßen Kontaktgeometrie können somit Fertigungstoleranzen ausgeglichen werden, wobei bei einer Punkt-Auflage außerdem die Richtung der Kontaktkraft stets definiert ist. Die Kontaktkraft ist nämlich derart orientiert, dass sie keine Komponente in Umfangsrichtung besitzt. Ein weiterer Vorteil ist, dass die Hertz'sche Spannung im Kontaktpunkt durch die Konformität der Kontaktflächen (ähnlich einem Kugellager) minimiert wird. Außerdem kann keine Kantenpressung auftreten.

Während der Freigabe des freizugebenden Elementes führt dieses eine axiale Bewegung aus, bei welcher kein Kontakt zwischen dem freizugebenden Element und Kanten oder Ecken der Spulensegmente vorkommen sollte, um hohe lokale Hertz'sche Spannungen und das Generieren von Partikeln zu vermeiden. Die Erfindung sieht zu diesem Zweck in bevorzugter Weise vor, dass die Gegenflächen der Spulensegmente derart gekrümmt ausgebildet sind, dass das Ende des freizugebenden Elements auch auf wenigstens einem ersten Teilweg der Verlagerung der Spulensegmente von der ersten in die zweite Position mit seiner sphärischen Oberfläche auf jeder gekrümmten Gegenfläche lediglich unter Ausbildung einer Punktberührung aufliegt. Gemäß einer weiteren bevorzugten Ausbildung ist vorgesehen, dass die Spulensegmente jeweils eine an die gekrümmte Gegenfläche anschließende zylindrische Ausnehmung aufweisen, sodass es bei der Freigabe des freizugebenden Elements und der dabei erfolgenden axialen Bewegung nicht zu einer Kollision mit vorspringenden Kanten kommt. Bevorzugt bilden die zylindrischen Ausnehmungen der Spulensegmente dabei gemeinsam einen Austrittskanal für das Ende des freizugebenden Elements. Zur Ausbildung der erfindungsgemäßen Punktberührungen muss das Ende des freizugebenden Elements eine zweiachsig gekrümmte, rotationssymmetrische Oberfläche aufweisen. Bei den Gegenflächen sind hingegen auch einachsig gekrümmte Flächen denkbar. Besonders bevorzugt ist aber eine Ausbildung, bei welcher auch die Gegenflächen als sphärische Flächen ausgebildet sind, wobei die Gegenflächen insbesondere konkav gekrümmt sind.

Wenn sowohl das Ende des freizugebenden Elements als auch die Gegenflächen als sphärische Flächen ausgebildet sind, ist bevorzugt vorgesehen, dass der Durchmesser der sphärischen Gegenflächen, der bei allen Gegenflächen gleich ist, größer ist als der Durchmesser der sphärischen Fläche des Endes des freizugebenden Elementes, um die erfindungsgemäße Punktberührung sicherzustellen. Dabei ist es von Vorteil, wenn der Kugelmittelpunkt der sphärischen Fläche des Endes des freizugebenden Elements auf der Achse des Spulenkörpers liegt und die Kugelmittelpunkte der sphärischen Gegenflächen in Bezug auf die Achse des Spulenkörpers exzentrisch angeordnet sind. Die Lage sämtlicher Mittelpunkte ist somit verschieden, sodass kein Mittelpunkt zweier geometrischer Merkmale geteilt wird.

Besonders bevorzugt ist eine Drei-Punkt-Auflage zwischen dem Ende des freizugebenden Elements und den Spulensegmenten. Die Erfindung sieht in diesem Zusammenhang vor, dass der Spulenkörper drei Segmente aufweist, die jeweils eine Gegenfläche aufweisen, auf denen das Ende des freizugebenden Elements mit seiner Oberfläche in der ersten Position der Spulensegmente und bevorzugt auch auf wenigstens einem ersten Teilweg der Verlagerung der Spulensegmente von der ersten in die zweite Position der Spulensegmente jeweils lediglich unter Ausbildung einer Punktberührung aufliegt.

Die Lage des Kontaktes in Umfangsrichtung zwischen dem freizugebenden Element und den Spulensegmenten bestimmt die Richtung, in welche die einzelnen Spulensegmente von dem freizugebenden Element nach der Freigabe radial nach außen gedrückt werden. Um dabei ein Blockieren zu verhindern, sollte die Kraft möglichst mittig angreifen, sodass eine ausschließlich radiale Bewegung der jeweiligen Spulensegmente gewährleistet ist. Die erfindungsgemäße Vorrichtung ist zu diesem Zweck bevorzugt derart weitergebildet, dass die Mittelpunkte der sphärischen Gegenflächen in den die Winkelhalbierende des jeweiligen Spulensegments enthaltenden Radialebenen angeordnet sind.

Um ein Kaltverschweißen des freizugebenden Elements mit dem geteilten Spulenkörper zu verhindern und gleichzeitig eine elektrische Isolierung bereitzustellen, ist bevorzugt vorgesehen, dass die Spulensegmente aus einem elektrisch isolierenden keramischen Material, bevorzugt ZrO₂ bestehen. Wenn die Spulensegmente aus Vollkeramik bestehen, kann eine aufwändige isolierende Beschichtung entfallen. Das Ende des freizugebenden Elements kann hingegen aus Stahl, insbesondere korrosionsbeständigem martensitischen Kaltarbeitsstahl, z.B. Cronidur® 30 (X 30 CrMoN 15 1) bestehen.

Die Erfindung wird nachfolgend anhand eines in der Zeichnung schematisch dargestellten Ausführungsbeispiels näher erläutert. In dieser zeigen
- Fig.1: eine perspektivische Darstellung einer Vorrichtung zum Festhalten und kommandierten Freigeben eines freizugebenden Elements eines Raumfahrzeuges,
- Fig.2: eine Querschnittsansicht des Spulenkörpers,
- Fig.3: eine perspektivische Darstellung des Endes des freizugebenden Elements,
- Fig.4: eine perspektivische Darstellung eines Spulensegments,
- Fig.5: einen Querschnitt entlang der Linie V-V der Fig.2,
- Fig.6: einen Querschnitt entlang der Linie VI-VI der Fig.2,
- Fig.7: eine Darstellung des Rückhaltebandes auf dem Spulenkörper in vorgespanntem Zustand,
- Fig.8: eine Darstellung des Rückhaltebandes in entspanntem Zustand,
- Fig.9a/9b: einen Vergleich zwischen einem Rückhalteband mit rechteckigem und mit rundem Querschnitt,
- Fig.10: eine perspektivische Darstellung der Freigabevorrichtung,
- Fig.11: eine Ansicht der Freigabevorrichtung von der Seite,
- Fig.12: einen Querschnitt der Freigabevorrichtung nach der Linie XII-XII der Fig.11,
- Fig.13a-13c: eine Darstellung der zurückgehaltenen und zweier freigegebener Zustände der Freigabevorrichtung,
- Fig.14: eine perspektivische Darstellung der Klemmvorrichtung für den Abreißdraht,
- Fig.15: eine Draufsicht der Klemmvorrichtung und
- Fig.16: einen Querschnitt der Klemmvorrichtung nach der Linie XVI-XVI der Fig.15.

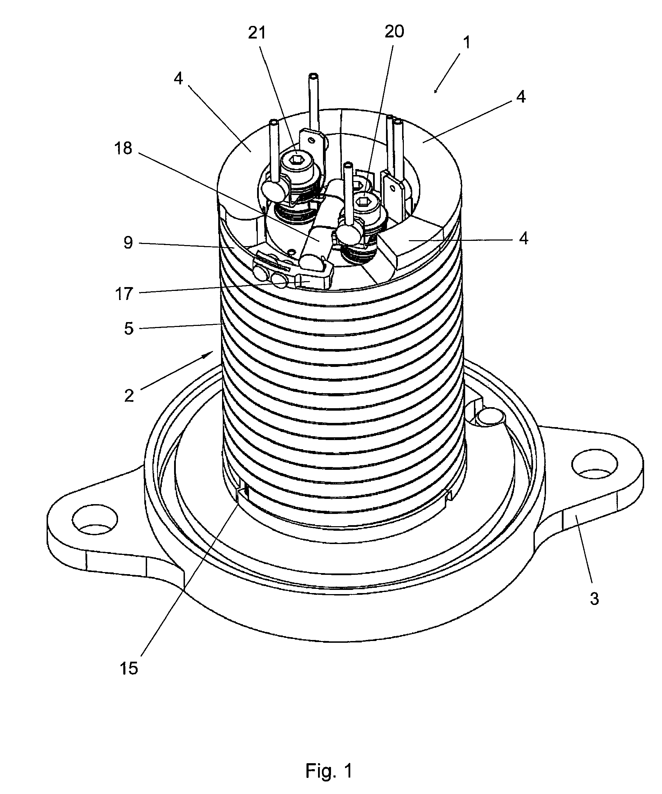

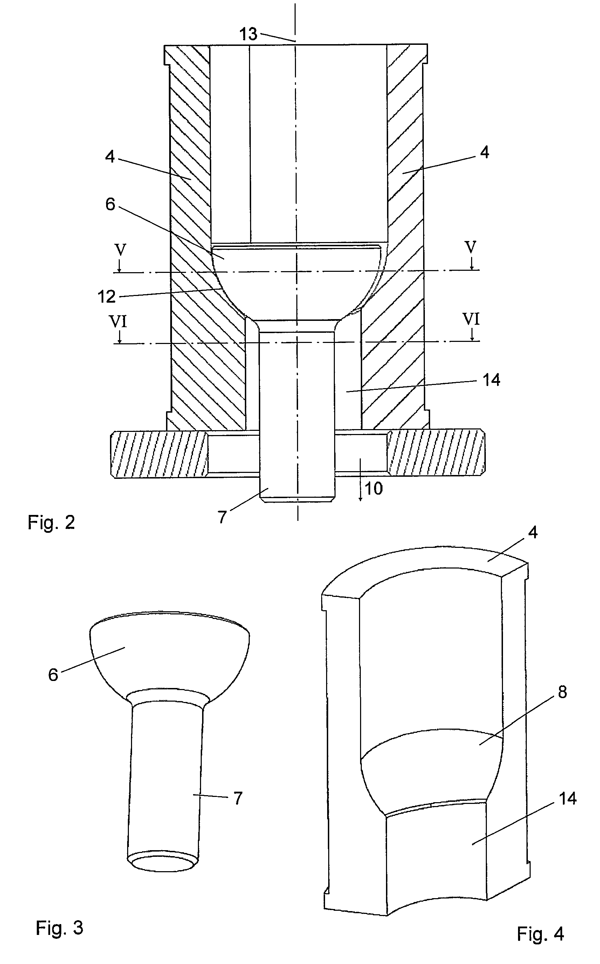

In Fig.1 ist eine Vorrichtung 1 zum Festhalten und kommandierten Freigeben eines freizugebenden Elements eines Raumfahrzeuges dargestellt. Es ist ein geteilter Spulenkörper 2 vorgesehen, der auf einem Befestigungsflansch 3 angebracht ist und aus drei Spulensegmenten 4 besteht, die von einem vorgespannten Rückhalteband 5 in der in Fig.1 dargestellten zusammengerückten Position gehalten werden. Wie dies aus der Querschnittsansicht gemäß Fig.2 erkennbar ist, ist der geteilte Spulenkörper 2 hohl ausgebildet und hält in seinem Inneren das Ende 6 eines freizugebenden Elements 7 fest. Das Ende 6 des freizugebenden Elements 7 ist zu diesem Zweck als Halbkugel ausgebildet und weist dementsprechend eine sphärische Oberfläche auf (Fig.3). Das Ende 6 liegt mit seiner sphärischen Oberfläche in Ausnehmungen 8 auf, wobei in jedem Spulensegment 4 eine Ausnehmung 8 ausgebildet ist, wobei die Ausnehmungen 8 jeweils eine konkave, sphärische Gegenfläche aufweisen (Fig.4). Das freizugebende Element 7 wird mit Hilfe einer nicht dargestellten Schraubenmutter in axialer Richtung gegen die Gegenflächen der Ausnehmungen 8 gespannt, sodass das freizugebende Element 7 durch den Spulenkörper 2 festgehalten wird, solange das vorgespannte Rückhalteband 5 die Spulensegmente 4 in der in Fig.2 dargestellten Position zusammenhält. Wenn das gespannte Ende 9 des Rückhaltebandes 5 freigegeben wird und das elastische Rückhalteband 5 dadurch auf einen größeren Durchmesser zurückfedert, werden die Spulensegmente 4 auf Grund der vom freizugebenden Element 7 am Kontakt der sphärischen Fläche des Endes 6 mit den sphärischen Gegenflächen der Ausnehmungen 8 auf die Spulensegmente 4 übertragenen Kräfte in radialer Richtung auseinandergedrückt, wodurch das freizugebenden Element in Richtung des Pfeils 10 freigegeben wird.

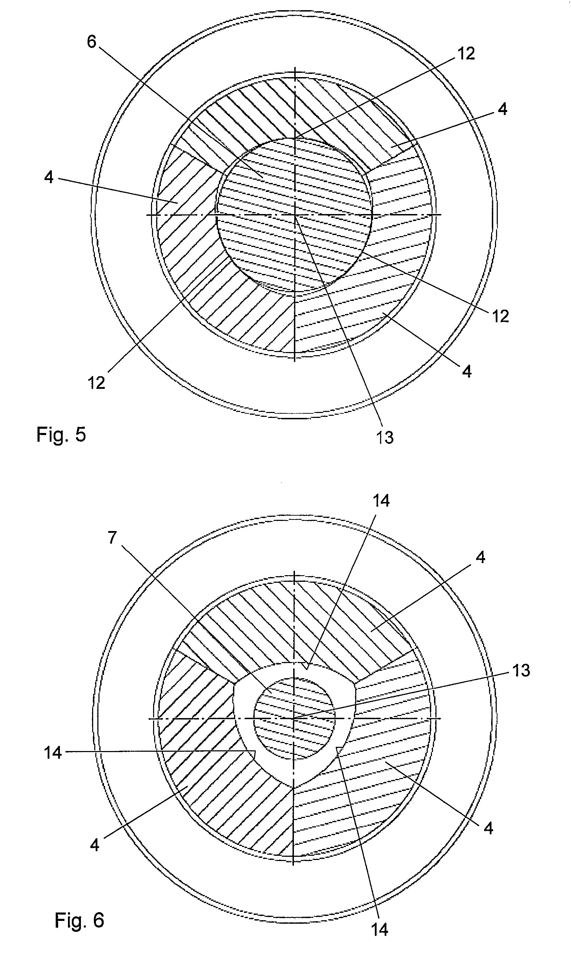

Wie dies insbesondere in der Schnittansicht gemäß Fig.5 ersichtlich ist, liegt das sphärisch ausgebildetes Ende 6 auf den Gegenflächen der Ausnehmungen 8 der drei Spulensegmente 4 unter Ausbildung einer Punktberührung auf, wobei der jeweilige Kontaktpunkt 12 in einer Ebene liegt, welche durch die Winkelhalbierenden der jeweiligen Spulensegmente 4 gegeben ist. Die sphärischen Gegenflächen der Ausnehmungen 8 sind dabei in Bezug auf die Achse 13 des Spulenkörpers 2 exzentrisch angeordnet, wobei der jeweilige Kugelmittelpunkt in einer Ebene liegt, welche durch die Winkelhalbierenden der Spulensegmente gegeben ist, und die Mittelpunkte im nicht freigegebenen Zustand des Spulenkörpers 2 nicht kongruent sind. Auch die zylindrischen Ausnehmungen 14 sind in Bezug auf die Achse 13 des Spulenkörpers exzentrisch angeordnet (Fig.6). Der Durchmesser der kugelförmigen Ausnehmung 8 und der zylindrischen Ausnehmungen 14 ist größer als jener der Kugel auf dem freizugebenden Element 7. Aufgrund der Exzentrizität und der verschiedenen Durchmesser ergibt sich eine Kontaktgeometrie, welche eine hohe Konformität - analog zu einem Kugellager - aufweist.

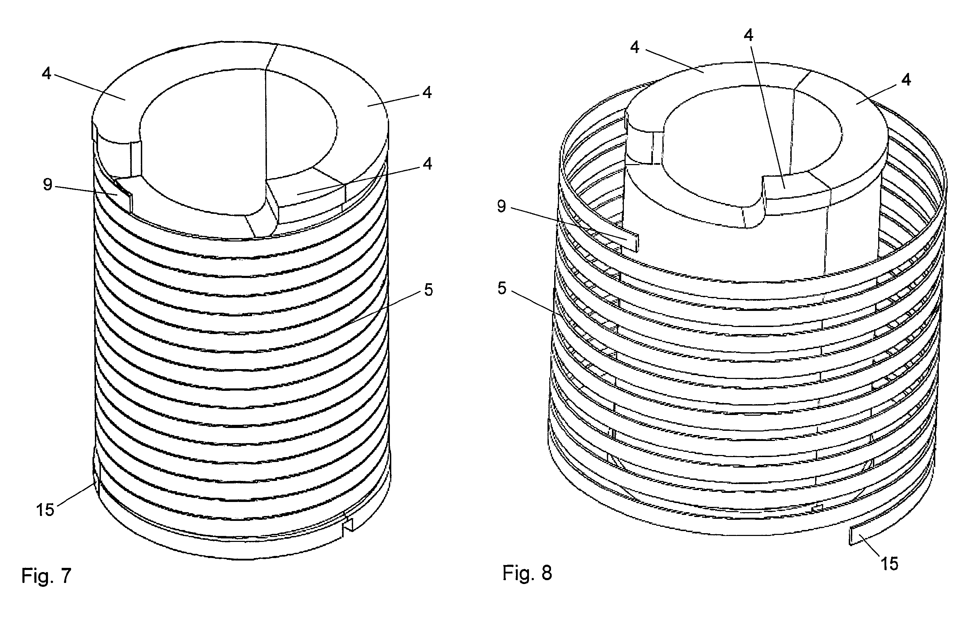

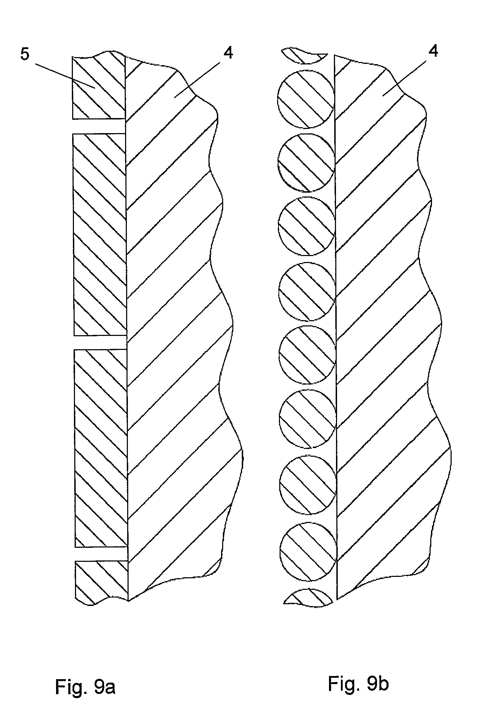

In den Fig.7, 8 und 9a/9b ist der Spulenkörper mit dem schraubenlinienförmig verlaufenden Rückhalteband 5 dargestellt. Das Rückhalteband 5 weist einen rechteckigen Querschnitt (Fig.9a) auf und hat im spannungsfreien Zustand (Fig.8) einen größeren Durchmesser als der Außendurchmesser der Spulensegmente 4. Das Rückhalteband 5 wird schraubenförmig und nicht-überlappend um die Spulensegmente 4 gewickelt und ist am unteren Ende 15 mit den Spulensegmenten 4 trennbar verbunden und am oberen Ende 9 von einer Freigabevorrichtung 16 gehalten, welche es ermöglicht, das obere Ende 9 des Rückhaltebandes 5 kommandiert freizugeben. Aus einem Vergleich der Fig.9a und 9b ergibt sich, dass bei einem Rechteckquerschnitt des Rückhaltebandes 5 im Vergleich zu einem kreisrunden Querschnitt ein wesentlich größerer Querschnitt zur Aufnahme der Zugkräfte zur Verfügung steht, während die von der Dicke des Bandes 5 bzw. dem Durchmesser des Runddrahtes abhängigen durch die aufgezwungene Verformung hervorgerufenen Biegespannungen im Wesentlichen gleich sind.

In Fig.9a ist ersichtlich, dass die einzelnen Windungen des Rückhaltebandes 5 einen geringen axialen Abstand voneinander haben, damit sichergestellt ist, dass sich die einzelnen Windungen beim Entspannungsvorgang des Rückhaltebandes 5 nicht gegenseitig behindern. Aber auch bei einer Ausführung, bei welcher sich die Windungen berühren, ist ein zufrieden stellendes Ergebnis zu erwarten.

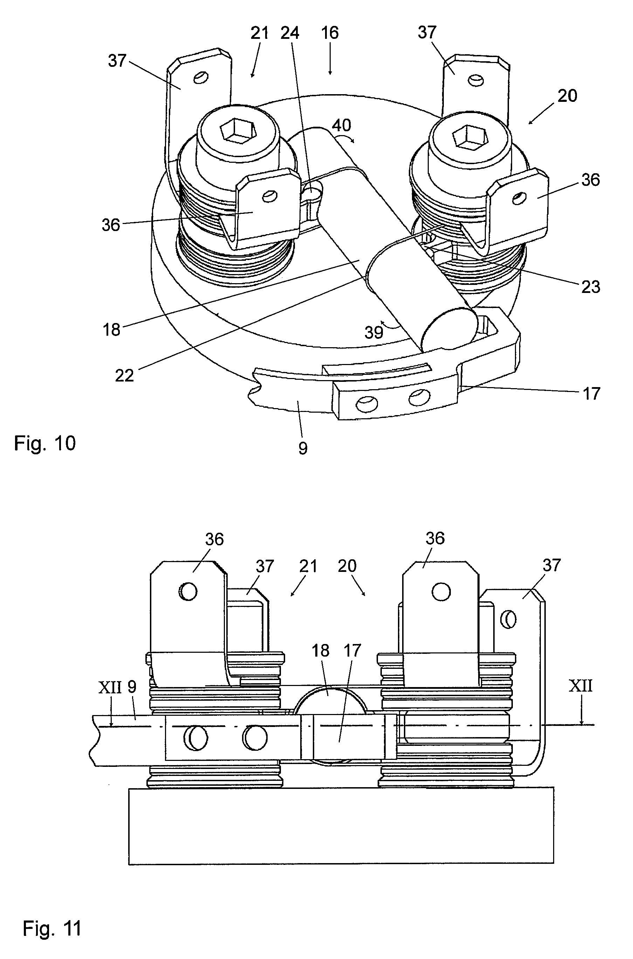

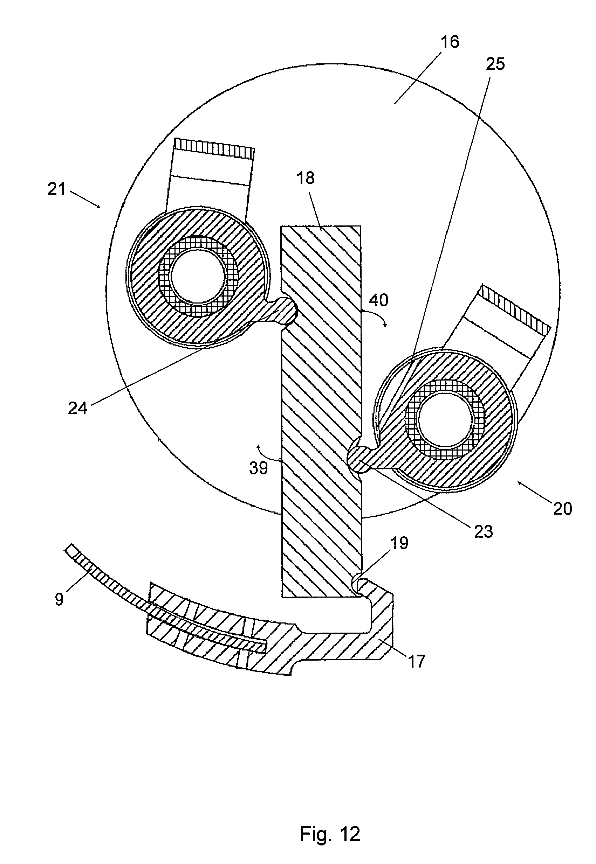

Die Fig.10 bis 13 zeigen die Freigabevorrichtung 16 zum kommandierten Freigeben des Endes 9 des Rückhaltebandes 5. Das Ende 9 des Rückhaltebandes 5 ist mit einem Haken 17 verbunden, welcher an einem Ende des Hebels 18 angreift und dort in eine Kerbe 19 eingreift. Der Hebel 18 wird an seinem anderen Ende mit Hilfe eines ersten Halteelements 20 und eines zweiten Halteelements 21 zurückgehalten. Die Halteelemente 20 und 21 weisen jeweils einen Abreißdraht 22 auf, der den Hebel 18 umfasst, ohne dabei in Nuten oder ähnlichem zu liegen. Zum mechanischen Halten und elektrischen Kontaktieren der Enden der Abreißdrähte 22 weist das Halteelement 20 bzw. 21 jeweils einen Scheibenstoß 11 auf, der weiter unten näher beschreiben ist. Die Abreißdrähte 22 können kommandiert geöffnet werden, indem ein elektrischer Strom durch sie geleitet wird, wodurch sich der Abreißdraht 22 erwärmt und seine mechanische Festigkeit sinkt bis er reißt. Dem Abreißdraht 22 ist beim ersten Halteelement 20 ein erstes Widerlager 23 bzw. eine Nase und beim zweiten Halteelement 21 ein zweites Widerlager 24 bzw. eine Nase zugeordnet, die eine exzessive Bewegung des Hebels 18 während des Angriffs von Inertialkräften, wie sie beispielsweise beim Start einer Trägerrakete auftreten, verhindern. Die Nuten im Hebel 18, in welchen die Nasen 23 und 24 angreifen, sind derart gestaltet, dass eine Drehbewegung des Hebels 18 ohne gleitende Relativbewegung möglich ist (Wälzkontakt) und der noch intakte Abreißdraht 22 die Drehbewegung nicht behindert, da er bei einer Verdrehung des Hebels 18 nicht gespannt, sondern entspannt wird.

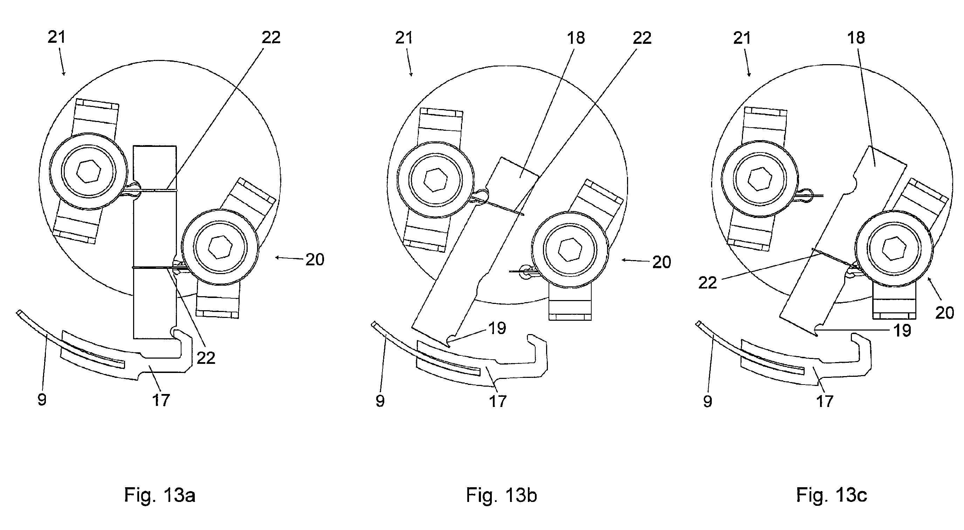

Der Haken 17 zieht den Hebel in der Zeichnung (Fig.10) nach links, während das erste Halteelement 20 auf den Hebel 18 eine nach rechts gerichtete und das zweite Halteelement 21 eine nach links gerichtete Kraft ausübt. Die Kraftverhältnisse sind ausgeprägt nicht-symmetrisch, sowohl dem Betrage der Einzelkräfte als auch deren Richtung nach. Bei einem Abreißen des Abreißdrahtes 22 des ersten Halteelements 20 erfolgt eine Freigabe des Hebels 18 in Richtung des Pfeils 39 und der Hebel 18 dreht um die Nase 24 (Fig.13b). Bei einem Abreißen des Abreißdrahtes 22 des zweiten Halteelements 21 erfolgt eine Freigabe des Hebels 18 in Richtung des Pfeils 40 und der Hebel 18 dreht um die Nase 23 (Fig.13c). Ausnehmungen 25 in den Halteelementen 20 und 21 ermöglichen einen größeren Drehwinkel des Hebels 18. Werden die Abreißdrähte 22 beider Halteelemente 20 und 21 geöffnet, so kann der Hebel 18 ebenfalls drehen. Ein nicht dargestelltes dünnes Band, welches den Hebel 18 lose, d.h. mit signifikantem Spiel und ohne jegliche Vorspannung, mit einem ortsfesten Teil verbindet, verhindert im Falle des Öffnens beider Abreißdrähte 22, dass der Hebel 18 exzessive Bewegungen im Raum ausführt.

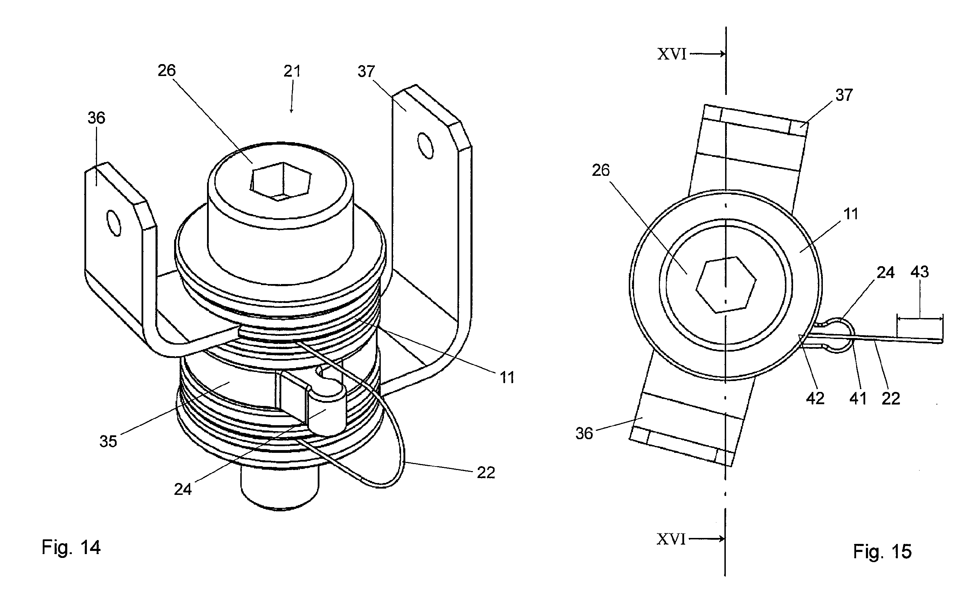

In der Detailansicht gemäß Fig.15 ist am Beispiel des zweiten Halteelements 21 ersichtlich, dass die Kontaktstelle 41 des Widerlagers 24 am Hebel 18, der Befestigungspunkt 42 der Enden des Abreißdrahtes 22 und die Kontaktstelle 43 des Abreißdrahtes 22 am Hebel 18 in der nicht freigegebenen Lage des Halteelements 21 im Wesentlichen in einer Ebene liegen. Dies führt dazu, dass der Abreißdraht bei einer Verschwenkung des Hebels 18 entspannt wird und somit keine Kräfte auf den Hebel 18 ausübt, die zu undefinierten Gleitbewegungen führen würden.

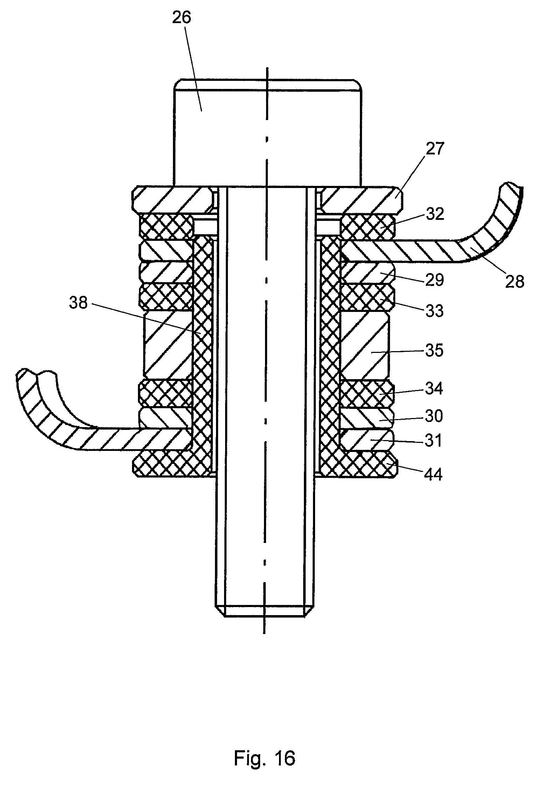

In den Fig. 14 bis 16 ist das Halteelement 21 im Detail dargestellt. Das Halteelement dient dem mechanischen Klemmen und elektrischen Kontaktieren des Abreißdrahtes 22 und ist als Scheibenstoß 11 ausgebildet, der von der Schraube 26 zusammengespannt wird. Mit der Schraube 26 wird über eine Scheibe 27 jedes Ende des Abreißdrahtes 22 zwischen leitenden Scheiben 28 und 29 bzw. 30 und 31 geklemmt, wobei mehrere mitgeklemmte Scheiben 32, 33 und 34 und eine mitgeklemmte Hülse 38 aus nichtleitendem Material die elektrische Isolierung sicherstellen und eine zwischen den isolierenden Scheiben 33 und 34 geklemmte Scheibe 35 die Nase 24 für die Abstützung des Hebels 18 aufweist.

Der Abreißdraht 22 besitzt eine deutlich höhere mechanische Festigkeit als die leitenden Scheiben 28 und 29 bzw. 30 und 31, deren Kanten abgerundet sind. Das eine Ende des Abreißdrahtes 22 ist zwischen den leitenden Scheiben 28 und 29 geklemmt, wobei die eine leitende Scheibe 28 so ausgeführt ist, dass sie gleichzeitig ein Interface 36 für eine elektrische Leitung aufweist. Da die leitenden Scheiben eine deutlich geringere mechanische Festigkeit aufweisen als der Abreißdraht 22, verformen sich diese unter der axialen Klemmkraft, die durch das Anziehen der Schraube 26 hervorgerufen wird. Das andere Ende des Abreißdrahtes 22 ist zwischen den leitenden Scheiben 30 und 31 geklemmt, wobei die leitende Scheibe 30 so ausgeführt ist, dass sie gleichzeitig ein Interface 37 für eine elektrische Leitung aufweist. Die Scheiben 32, 33 und 34 aus nichtleitendem Material isolieren die elektrisch leitenden Scheiben voneinander, während die Hülse 38 aus nicht leitendem Material die Schraube 26 elektrisch isoliert. Die Hülse 38 weist einen den Scheibenstoß abschließenden Rand 44 auf. Die Scheibe 36 weist eine Nase 24 auf, welches das Widerlager für den mit dem Abreißdraht 22 gehaltenen Hebel (Fig.10) bildet.

Wird ein elektrischer Strom über die leitenden Scheiben 28 und 31 durch den Abreißdraht 22 geleitet, so beginnt sich dieser zu erwärmen. Dadurch sinkt seine mechanische Festigkeit bis er versagt. Nach einer Auslösung muss der Abreißdraht 22 ausgetauscht werden, um den Scheibenstoß wiederverwenden zu können. Durch ein Anpassen der Dicke aller geklemmten Scheiben unter Berücksichtigung ihres jeweiligen linearen Wärmeausdehnungskoeffizienten wird ein mittlerer linearer Ausdehnungskoeffizient der geklemmten Teile erreicht, welcher jenem der Schraube 26 entspricht. Dadurch werden relative Dehnungen bei Temperaturänderung vermieden.

## Patentansprüche

1. Vorrichtung (1) zum Festhalten und kommandierten Freigeben eines freizugebenden Elements (7) eines Raumfahrzeuges, umfassend einen wenigstens zwei Spulensegmente (4) aufweisenden geteilten Spulenkörper (2), bei dem wenigstens ein Spulensegment (4) von einer ersten Position in eine zweite Position verlagerbar ist, wobei die Spulensegmente (4) in der ersten Position ein Ende (6) des freizugebenden Elements (7) in einer Halteposition halten und in der zweiten Position das Ende (6) des freizugebenden Elements (7) aus seiner Halteposition freigeben, ein Rückhalteelement (5) zum Halten der Spulensegmente (4) in der ersten Position und eine Freigabevorrichtung (16) zum Freigeben des Rückhalteelements (5), wobei das Ende (6) des freizugebenden Elements (7) eine zweiachsig gekrümmte, rotationssymmetrische, insbesondere sphärische Oberfläche aufweist, **dadurch gekennzeichnet, dass** die Oberfläche mit solcherart gekrümmten Gegenflächen (8) der Spulensegmente (4) zusammenwirkt, dass das Ende (6) des freizugebenden Elements (7) in der ersten Position der Spulensegmente (4) mit seiner Oberfläche auf jeder gekrümmten Gegenfläche (8) lediglich unter Ausbildung einer Punktberührung (12) aufliegt.

2. Vorrichtung nach Anspruch 1, **dadurch gekennzeichnet, dass** die Gegenflächen (8) der Spulensegmente (4) derart gekrümmt ausgebildet sind, dass das Ende (6) des freizugebenden Elements (7) auch auf wenigstens einem ersten Teilweg der Verlagerung der Spulensegmente (4) von der ersten in die zweite Position mit seiner sphärischen Oberfläche auf jeder gekrümmten Gegenfläche (8) lediglich unter Ausbildung einer Punktberührung (12) aufliegt.

3. Vorrichtung nach Anspruch 1 oder 2, **dadurch gekennzeichnet, dass** die Gegenflächen (8) als sphärische Flächen ausgebildet sind.

4. Vorrichtung nach Anspruch 3, **dadurch gekennzeichnet, dass** der Durchmesser der sphärischen Gegenflächen (8) größer ist als der Durchmesser der sphärischen Fläche des Endes (6) des freizugebenden Elementes (7).

5. Vorrichtung nach einem der Ansprüche 1 bis 4, **dadurch gekennzeichnet, dass** der Spulenkörper (2) drei Segmente (4) aufweist, die jeweils eine Gegenfläche (8) aufweisen, auf denen das Ende (6) des freizugebenden Elements (7) mit seiner Oberfläche in der ersten Position der Spulensegmente (4) und bevorzugt auch auf wenigstens einem ersten Teilweg der Verlagerung der Spulensegmente (4) von der ersten in die zweite Position jeweils lediglich unter Ausbildung einer Punktberührung (12) aufliegt.

6. Vorrichtung nach Anspruch 3, 4 oder 5, **dadurch gekennzeichnet, dass** der Kugelmittelpunkt der sphärischen Fläche des Endes (6) des freizugebenden Elements (7) auf der Achse (13) des Spulenkörpers (2) liegt und dass die Kugelmittelpunkte der sphärischen Gegenflächen (8) in Bezug auf die Achse (13) des Spulenkörpers (2) exzentrisch angeordnet sind.

7. Vorrichtung nach einem der Ansprüche 3 bis 6, **dadurch gekennzeichnet, dass** die Mittelpunkte der sphärischen Gegenflächen (8) in den die Winkelhalbierende des jeweiligen Spulensegments (4) enthaltenden Radialebenen angeordnet sind.

8. Vorrichtung nach einem der Ansprüche 3 bis 7, **dadurch gekennzeichnet, dass** die Lage der Mittelpunkte aller sphärischen Flächen voneinander verschieden ist.

9. Vorrichtung nach einem der Ansprüche 1 bis 8, **dadurch gekennzeichnet, dass** die Spulensegmente (4) jeweils eine an die gekrümmte Gegenfläche (8) anschließende zylindrische Ausnehmung (14) aufweisen.

10. Vorrichtung nach einem der Ansprüche 1 bis 9, **dadurch gekennzeichnet, dass** die Spulensegmente (4) aus einem elektrisch isolierenden keramischen Material, bevorzugt ZrO₂ bestehen.

11. Vorrichtung nach einem der Ansprüche 1 bis 10, **dadurch gekennzeichnet, dass** das Ende (6) des freizugebenden Elements (7) aus Stahl, insbesondere korrosionsbeständigem martensitischen Kaltarbeitsstahl, z.B. X 30 CrMoN 15 1 besteht.

## Claims

1. A device (1) for the retaining and controlled releasing of an element (7) of a spacecraft, which element (7) is to be released, comprising a divided spool body (2) that comprises at least two spool segments (4), in which spool body (2) at least one spool segment (4) is displaceable from a first position to a second position, wherein the spool segments (4) in the first position hold in a holding position one end (6) of the element (7) to be released, and in the second position release from its holding position the end (6) of the element (7) to be released, a retaining element (5) for holding the spool segments (4) in the first position, and a release device (16) for releasing the retaining element (5), wherein the end (6) of the element (7) to be released comprises a two-axis-curved rotationally symmetrical surface, in particular a spherical surface, **characterised in that** the surface interacts with curved counterfaces (8) of the spool segments (4) in such a manner that in the first position of the spool segments (4) the surface of the end (6) of the element (7) to be released rests against each curved counterface (8) merely by establishing point contact (12).

2. The device according to claim 1, **characterised in that** the counter surfaces (8) of the spool segments (4) are curved in such a manner that the spherical surface of the end (6) of the element (7) to be released also on at least one first partial path of the displacement of the spool segments (4) from the first to the second position rests against each curved counterface (8) merely by establishing point contact (12).

3. The device according to claim 1 or 2, **characterised in that** the counterfaces (8) are designed as spherical surfaces.

4. The device according to claim 3, **characterised in that** the diameter of the spherical counterfaces (8) is larger than the diameter of the spherical surface of the end (6) of the element (7) to be released.

5. The device according to any one of claims 1 to 4, **characterised in that** the spool body (2) comprises three segments (4), each comprising a counterface (8), on which segments (4) the surface of the end (6) of the element (7) to be released in the first position of the spool segments (4) and preferably also on the at least one first partial path of the displacement of the spool segments (4) from the first to the second position in each case rests merely by establishing point contact (12).

6. The device according to claim 3, 4 or 5, **characterised in that** the centre of the sphere of the spherical surface of the end (6) of the element (7) to be released is located on the axis (13) of the spool body (2) and **in that** the centres of the sphere of the spherical counterfaces (8) are arranged so as to be eccentric relative to the axis (13) of the spool body (2).

7. The device according to any one of claims 3 to 6, **characterised in that** the centres of the spherical counterfaces (8) are arranged in the radial planes that contain the angle bisector of the respective spool segment (4).

8. The device according to any one of claims 3 to 7, **characterised in that** the position of the centres of all spherical surfaces differs.

9. The device according to any one of claims 1 to 8, **characterised in that** the spool segments (4) in each case comprise a cylindrical recess (14) that adjoins the curved counterface (8).

10. The device according to any one of claims 1 to 9, **characterised in that** the spool segments (4) are made of an electrically-insulating ceramic material, preferably ZrO₂.

11. The device according to any one of claims 1 to 10, **characterised in that** the end (6) of the element (7) to be released is made of steel, in particular corrosion-resistant martensitic cold work steel, e.g. X 30 CrMoN 15 1.

## Revendications

1. Dispositif(1) pour le maintien et la libération commandée d'un élément (7) à libérer d'un véhicule spatial, comprenant
un corps de bobine (2) divisé, présentant au moins deux segments de bobine (4), dans lequel au moins un segment de bobine (4) peut être déplacé d'une première position dans une seconde position, les segments de bobine (4) maintenant dans la première position une extrémité (6) de élément (7) à libérer dans une position de retenue et libérant dans la seconde position l'extrémité (6) de l'élément (7) à libérer de sa position de retenue,
un élément de retenue (5) pour le maintien des segments de bobine (4) dans la première position et un dispositif de libération (16) pour la libération de l'élément de retenue (5), l'extrémité (6) de l'élément (7) à libérer présentant une surface incurvée biaxialement, à symétrie de rotation, en particulier sphérique,
**caractérisé en ce que** la surface coopère avec des contresurfaces (8) des segments de bobine (4) incurvées de telle sorte que l'extrémité (6) de élément (7) à libérer, dans la première position des segments de bobine (4), repose par sa surface sur chaque contre-surface (8) incurvée que par un simple contact ponctuel (12).

2. Dispositif selon la revendication 1, **caractérisé en ce que** les contre-surfaces (8) des segments de bobine (4) sont conçues de manière incurvée, de telle sorte que l'extrémité (6) de élément (7) à libérer repose également sur au moins un premier trajet partiel du déplacement des segments de bobine (4) de la première dans la seconde position par sa surface sphérique sur chaque contre-surface incurvée (8) que par un simple contact ponctuel (12).

3. Dispositif selon la revendication 1 ou 2, **caractérisé en ce que** les contre-surfaces (8) sont réalisées sous la forme de surfaces sphériques.

4. Dispositif selon la revendication 3, **caractérisé en ce que** le diamètre des contre-surfaces (8) sphériques est plus grand que le diamètre de la surface sphérique de l'extrémité (6) de l'élément (7) à libérer.

5. Dispositif selon l'une des revendications 1 à 4, **caractérisé en ce que** le corps de bobine (2) comporte trois segments (4) qui présentent chacun une contre-surface (8) sur laquelle l'extrémité (6) de l'élément (7) à libérer repose par sa surface dans la première position des segments de bobine (4) et, de préférence, également sur au moins un premier trajet partiel du déplacement des segments de bobine (4) de la première dans la seconde position respectivement que par un simple contact ponctuel (12).

6. Dispositif selon la revendication 3, 4 ou 5, **caractérisé en ce que** le centre de la surface sphérique de l'extrémité (6) de l'élément (7) à libérer repose sur l'axe (13) du corps de bobine (2) et **en ce que** les centres des contre-surfaces sphériques (8) sont disposés de manière excentrique par rapport à l'axe (13) du corps de bobine (2).

7. Dispositif selon l'une des revendications 3 à 6, **caractérisé en ce que** les centres des contre-surfaces sphériques (8) sont disposés dans les plans radiaux contenant les bissectrices de chaque segment de bobine (4).

8. Dispositif selon l'une des revendications 3 à 7, **caractérisé en ce que** les positions des centres de toutes les surfaces sphériques diffèrent les unes des autres.

9. Dispositif selon l'une des revendications 1 à 8, **caractérisé en ce que** les segments de bobine (4) présentent chacun un évidement (14) cylindrique se raccordant à la contre-surface (8) incurvée.

10. Dispositif selon l'une des revendications 1 à 9, **caractérisé en ce que** les segments de bobine (4) sont réalisés dans un matériau céramique électriquement isolant, de préférence du ZrO₂.

11. Dispositif selon l'une des revendications 1 à 10, **caractérisé en ce que** l'extrémité (6) de l'élément (7) à libérer est en acier, en particulier un acier pour travail à froid martensitique résistant à la corrosion, par ex. l'acier X 30 CrMoN 15 1.
